# NEUE EUROPÄISCHE PATENTSCHRIFT

(11) **EP 1 050 331 B2**
(45) Veröffentlichungstag und Bekanntmachung des Hinweises auf die Entscheidung über den Einspruch: **03.03.2010**
(45) Hinweis auf die Patenterteilung: 10.12.2003
(21) Anmeldenummer: 00107474.9
(22) Anmeldetag: 06.04.2000
(51) Int. Cl.: B01D 39/08, B01D 39/16, B32B 5/26

(54) **Zwei- oder mehrlagiges Filtermedium für die Luftfiltration und daraus hergestelltes Filterelement**
Double- or multilayered filtration material for air filtration and filter element made thereof
Milieu filtrant à deux ou plusieurs couches pour filtration de l'air et élément filtrant à partir de celle-ci

(30) Priorität: 06.05.1999 DE 19920983
(43) Veröffentlichungstag der Anmeldung: 08.11.2000
(73) Patentinhaber: Neenah Gessner GmbH, 83052 Bruckmühl (DE)
(72) Erfinder: Strauss, Andreas, 83075 Bad Feilnbach (DE)
(74) Vertreter: Bauer, Friedrich

(56) Entgegenhaltungen:
- EP-A- 0 338 479
- EP-A- 0 960 645
- DE-U- 29 814 830
- US-A- 4 759 782
- US-A- 5 609 947
- US-A- 5 647 881

## Beschreibung

Die Erfindung betrifft zwei- oder mehrlagige Filtermedien für die Luftfiltration, d.h. zur Filtration von Feststoffen aus Gasen, sowie Filterelemente unter Verwendung dieser Filtermedien, zum Beispiel sterngefaltete Patronen, plissierte Panelfilter, Cassetten, Mini-Pleat-Cassetten, Flachfilter etc.

Zur Luftreinigung sowohl für Klima- und Lüftungszwecke, z.B. in Gebäuden oder Fahrzeugen, als auch für Verbrennungskraftmaschinen wie z.B. Gasturbinen oder Diesel- und Benzinmotoren für Kraftfahrzeuge aller Art werden üblicherweise Luftfiltermedien und daraus hergestellte Luftfilter eingesetzt, die eine gewisse, limitierte Staubspeicherkapazität aufweisen und bei Erreichen einer bestimmten Grenze, die z.B. nach Gebrauchsstunden; Differenzdruck oder Kilometerleistung bemessen sein kann, ausgetauscht werden müssen. Die Staubspeicherkapazität bemißt sich somit nach der Menge des Staubes, welche der Luftfilter maximal aufnehmen kann, bis eine untere Grenze für eine bestimmte durchzulassende Luftmenge und damit das Standzeitende erreicht ist.

In der Regel ist bei derartigen Anwendungen das notwendige Niveau des Abscheidegrades bekannt oder festgelegt, z.B. durch die Filterklasse in der Klima- und Lüftungstechnik oder eine vorgegebene Prozentzahl der abzuscheidenden Partikel je nach Anforderung und Testmethode für die jeweilige Verbrennungskraftmaschine (z.B. Fraktionsabscheidegrade oder gravimetrischer Abscheidegrad). Die Prüfung erfolgt entsprechend der Testmethode mit einem Testaerosol (meist Teststaub, z.B. SAE fein oder SAE grob) unter genau festgelegten Bedingungen wie Anströmgeschwindigkeit, Rohgaskonzentration, Zeitpunkt und Dauer der Messung, Abbruchkriterium für das Ende der Messung etc. Der Abscheidegrad gibt somit an, wieviel Prozent des Staubs im Filter zurückgehalten wird, und hängt maßgebend von der Porengröße des Luftfilters ab.

Das Bestreben dabei ist, unter diesen Bedingungen eine möglichst hohe Staubspeicherkapazität und damit Standzeit zu erreichen. Da aber der Abscheidegrad einerseits und die Standzeit andererseits negativ zueinander korrelieren, kann mit homogenen, einlagigen Medien ein Standzeitgewinn nur auf Kosten des Abscheidegrades erreicht werden, sofern nicht einfach die eingebaute Filterfläche vergrößert wird. Dies ist nicht allein durch erhöhte Kosten limitiert, sondern insbesondere auch durch einen beschränkten Einbauraum, so dass z.B. bei einem plissierten Panelfilter die Anzahl der Falten nicht im erforderlichen Maße erhöht werden kann.

Als Notbehelf werden heute die plissierten Falten aus imprägniertem Papier in Panelfiltern anströmseitig mit einer Schaumstofflage abgedeckt, die einen Teil des Staubes zurückhalten oder zumindest die kinetische Energie der Partikel reduzieren soll, so dass eine Standzeitverlängerung erfolgt. Diese Methode weist jedoch große produktionstechnische Nachteile auf, da die Schaumstofflage nach Erzeugen des Panels als weiterer Verarbeitungsschritt z.B. mit Hotmeltraupen auf das Plisseé geklebt werden muss.

Für Verbrennungsmotoren sind ferner Gradientenfilter bekannt, die aus Synthesefasern hergestellt werden und in Durchströmungsrichtung zunehmend dichter werden. Hier werden an der Oberfläche die gröberen Partikel abgeschieden und in der Tiefe die feineren. Nachteilig ist hier, dass diese Materialien so dick sind, dass bei gleichem Bauraum erheblich weniger Falten eingebaut werden können. Dies erhöht allerdings die Anströmgeschwindigkeit mit all den damit verbundenen Nachteilen: Höherer Drückverlust des Filters an sich durch die höhere Strömungsgeschwindigkeit und Abscheidung der geforderten Staubmenge auf weniger Filterfläche, so dass die spezifische Staubspeicherkapazität hier um ein Vielfaches höher sein muss. Zusätzlich verlangen diese Filtermedien die komplette Änderung der heute gängigen Produktionsausstattung, weil das Abdichten der Stirnseiten der Falten mit der üblichen Hotmelttechnologie nicht mehr möglich ist. Vielmehr werden die Faltenbälge aus diesen Medien direkt im Spritzgussverfahren in einen Kunststoffrahmen eingespritzt, was entsprechend aufwendig ist.

Weitere heute bekannte technische Lösungen zur Standzeiterhöhung z.B. für Klima- und Lüftungstechnik-Anwendungen sind im DE-GM 92 18 021.3 oder auch EP 0 687 195 beschrieben. Dort wird eine Feinfilterschicht aus schmelzgeblasenem Mikrofaservlies, die den Abscheidegrad bestimmt, anströmseitig mit einer Grobfilterschicht belegt, die die Staubkapazität erhöht. Der Nachteil ist hier, dass für eine plissierfähige Ausführung in der Regel eine dritte Schicht nötig ist, die die mechanische Festigkeit (insbesondere Steifigkeit) liefert, damit das Plisseé selbsttragend ist.

Speziell für die Kabinenfiltration im KFZ-Bereich werden ebenfalls schmelzgeblasene Vliese als Feinfilter verwendet, während auf der Anströmseite gröbere Strukturen, z.B. Papier oder Spinnvlies, als Staubspeicher dienen.

Das Prinzip des Schmelzblasens ist hierbei auch unter dem Begriff Meltblown bekannt und schon von Wente, Van A. unter dem Titel "Superfine Thermoplastic Fibers" in Industrial Engineering Chemistry, Vol. 48, S. 1342 - 1346 beschrieben. Diese Meltblown-Schichten dienen in der Gas- bzw. Luftfiltration generell - bedingt durch die feinen Fasern von üblicherweise etwas unter 1 µm bis 10 µm Faserdurchmesser und durch häufig zusätzlich aufgebrachte Elektretladung - als hochabscheidende Filterschichten und sind z.B. auch in EP 0 687 195, DE-GM 92 18 021 oder DE 196 18 758 beschrieben, wobei die feine Meltblownschicht immer abströmseitig (als zweite Filterschicht) eingesetzt wird. Die Trägermaterialien auf der Anströmseite dienen als Staubspeicher im Sinne von Tiefenfiltration, die Meltblownschicht als zweite Filterstufe im Sinne eines Feinstaubabscheiders. Führt man einen Bestaubungstest von der "falschen" Seite her durch, also mit Anströmung von der Meltblownschichtseite, ist der Anfangsabscheidegrad mehr oder weniger identisch, aber die Staubspeicherkapazität sinkt, d.h., es bildet sich der an sich unerwünschte, druckverlusterhöhende Filterkuchen auf der anströmseitigen Meltblownschichtoberfläche.

In der DE 44 43 158 ist ein solcher Aufbau mit der Meltblownschicht auf der Anströmseite beschrieben, wobei über das sehr gute Abscheideverhalten des Meltblownmaterials ein hohes Maß an Oberflächenfiltration erreicht wird, während das Trägermaterial rein mechanische Funktion übernimmt. Ziel ist dort jedoch eindeutig, eine gute Abreinigbarkeit mit z.B. Druckluft nach Erreichen des Enddifferenzdruckes zu erzielen, aber weder eine hohe Staubaufnahmekapazität während der Bestaubung noch eine Tiefenfiltration. Durch die Meltblownschicht wird dort eine extrem starke Abscheidegraderhöhung, aber gleichzeitig eine Verkürzung der Standzeit im Vergleich zu der zweiten, sehr offenporösen Schicht erzielt.

Aufgabe der Erfindung ist es, ein Filtermedium und einen Luftfilter zu schaffen, mit dem die Staubspeicherkapazität ohne wesentliche Veränderung des Abscheidegrads und ohne große Erhöhung der Dicke des Filtermediums erhöht werden kann.

Diese Aufgabe wird erfindungsgemäß durch die Merkmale des Anspruchs 1 gelöst. Vorteilhafte Ausführungsformen der Erfindung sind in den weiteren Ansprüchen beschrieben.

Erfindungsgemäß befindet sich auf der Anströmseite des Filtermediums mindestens eine Meltblownschicht, deren Porengröße größer ist als diejenige der nachfolgenden Lage (n).

Bei Experimenten mit - normalerweise sehr feinfaserigen (Durchmesser < 1 - 10 µm) - Meltblown-Vliesen wurde zur Überraschung herausgefunden, dass mit dem Meltblownprozeß auch sehr grobe, offene, d.h. flauschige (oder fluffige) Meltblown-Vliese hergestellt werden können, die bei Verwendung auf der Anströmseite eines klassischen Filterpapieres die Standzeit deutlich erhöhen, nämlich je nach Ausführung um ca. 30 bis über 300 %. Dem Meltblownvlies kommt hierbei weniger eine echt filternde Wirkung zu, sondern vielmehr wird der sich auf der Anströmseite des Papieres bildende Filterkuchen, der sich in die Meltblownschicht einlagert, deutlich lockerer ausgebildet und verursacht deshalb weniger Druckverlust. Hierzu wird ein Faserdurchmesser von über 10 µm oder sogar über 15 µm gewählt, wobei sich - abhängig vom verwendeten Polymer - zumindest teilweise Faserbänder aus 3 bis 7 parallelen Fasern bilden, die in einer Ebene liegen.

Hierbei ist bezeichnend, dass das Meltblownmaterial erstmals - im Gegensatz zum Stand der Technik - anströmseitig als sehr offene Struktur rein für die Staubspeicherkapazität verantwortlich ist, während das abströmseitige Papier in gewohnter Weise den Abscheidegrad sicherstellt. Diese zweilagige Kombination weist nur einen geringfügig höheren Abscheidegrad als das Papier alleine auf, aber die erwünschte stark erhöhte Standzeit. Die Änderung des Abscheidegrads bewegt sich je nach Testmethode lediglich im Bereich zwischen 0 und 1%, maximal bis zu 2% bei der gravimetrischen Abscheidung.

Die erfindungsgemäßen groben Strukturen sind mit den gängigen Polymeren erzielbar wie z.B. Polyethylen (PE) oder Polypropylen (PP). Wegen der höheren Temperaturbeständigkeit sind jedoch Polyphenylensulfid (PPS), Polybutylenterephtalat (PBT), Polyethylenterephtalat (PET), Polycarbonat (PC) etc., oder Gemische hiervon bevorzugt. Bei der Herstellung von entsprechend groben, flauschigen Strukturen, die die gewünschte Staubkapazität aufweisen, kommt im Meltblown-Prozess insbesondere dem Zusammenspiel von Schmelzindex (MFI) des Polymers und der Temperaturführung große Bedeutung zu.

Die stark standzeiterhöhende Wirkung von Meltblown auf der Anströmseite tritt erst dann auf, wenn die Meltblownstruktur entsprechend grob bzw. offen wird. Es hat sich herausgestellt, dass Schichten - je nach Flächenmasse - unter etwa 2000 l/m²s Luftdurchlässigkeit (bei 200 Pa) die Standzeit eher reduzieren als erhöhen (allerdings mit starkem Gewinn beim Abscheidegrad). Erfindungsgemäß beträgt die Luftdurchlässigkeit der Meltblownschicht daher mehr als 5000 l/m²s (bei 200 Pa), wobei die Porengröße der Meltblownschicht mehr als 250 µm beträgt. Bei Luftdurchlässigkeiten von über 5000 l/m²s (bei 200 Pa) ist ein Flächenmassebereich von 15 - 35 g/m² bevorzugt. Für besonders kostengünstige Varianten kann allerdings die Flächenmasse auch bis auf etwa 10 g/m² reduziert werden oder für eine besonders hohe Staubspeicherkapazität bei hohen Anströmgeschwindigkeiten bis auf ca. 100 g/m² erhöht werden. Bei zu niedriger (unter 10 - 15 g/m²) Flächenmasse weist das Meltblownmaterial jedoch einen starken Verlust an Staubspeicherkapazität auf und bei sehr hohen Flächenmassen (über 50 - 100 g/m²) steigen die Kosten überproportional im Vergleich zum technischen Effekt.

Als zweite Filterlage, die bei rohgasseitigem Meltblownmaterial dann der zweiten Filterstufe entspricht bzw. überhaupt erst einen nennenswerten Abscheidegrad des Gesamtsystems erzeugt, ist jeder bekannte Filterwerkstoff denkbar: Krempelvliese, nassgelegte Vliese, Spinnvliese, Meltblownvliese, Papiere aus reiner Cellulose oder mit Kunstfaseranteil, die entsprechend imprägniert sein können, etc. Zur Erzielung weiterer Tiefenfiltration kann auch diese zweite Filterlage wiederum in sich einen Gradienten aufweisen oder sogar zwei- oder mehrlagig ausgebildet sein, so dass das erfindungsgemäße Filtermedium insgesamt nicht nur zwei-, sondern drei- oder mehrlagig sein kann.

Bei der Verarbeitung ist es unter Umständen möglich, die übereinandergelegten Schichten ohne spezielle Verbindungsmittel oder zusätzliche Verbindungsverfahren zu plissieren. Da sich die Prozesse je nach Verarbeiter aber unterscheiden, ist es günstig, die Einzellagen miteinander zu verbinden, so dass sich beim Plissieren die Lagen nicht verschieben. Der Verbund der Einzellagen erfolgt mit bekannten Technologien, zum Beispiel Ultraschallschweißung, thermische Schweißung, Sprühkleber oder rasterpunkt- oder streifenförmiger Kleberauftrag, wobei sich die Ultraschallschweißung als besonders vorteilhaft erwiesen hat, weil die watteartige Struktur des Meltblown-Vorfiltermaterials bei der Verschweißung gleichzeitig in sich verfestigt wird, ohne andererseits die Flauschigkeit allzu negativ zu beeinflussen.

Durch die feste Verbindung der Vorfilterlage aus Meltblownmaterial mit der/den weitere(n) Lage(n) ist aus produktionstechnischer Sicht der Vorteil gegeben, dass ein solcher Verbund wie jedes Standardpapier ohne Anpassungen an der Plissiermaschine verarbeitet werden kann. Auch die Abdichtung der Stirnseiten der Falten auf der Reingasseite kann konventionell mit Hotmeltraupe erfolgen.

Wegen der geringen Dickenzunahme und der Flauschigkeit der Vorfilterlage kann mit den gleichen Faltenabständen wie bisher oder mit nur minimaler Erhöhung der Faltenabstände (max. ca. 10 - 15 %) gearbeitet werden, das heißt, die Faltenzahl pro Filterelement kann gleich bleiben (oder wird nur um 10 - 15 % reduziert) und die erhöhte spezifische Staubspeicherkapazität des erfindungsgemäßen Mediums kann im Filterelement voll umgesetzt werden. Im Filterelement kann alternativ die stark erhöhte Staubspeicherkapazität dazu genutzt werden, die Faltenzahlen so stark zu reduzieren, dass für das Filterelement die gleiche Staubspeicherkapazität resultiert wie bei Verwendung eines Standardmediums. Der Vorteil liegt in diesem Falle darin, dass bei den genannten Faltenabständen das Filterelement deutlich kleiner ist und der Forderung der KFZ-Industrie nach Bauraumverkleinerung Rechnung getragen wird.

Die Erfindung wird nachfolgend anhand der Zeichnung beispielshaft näher erläutert. In diesen zeigen
- Figur 1 :: einen Querschnitt durch eine erste Ausführungsform des erfindungsgemäßen Filtermediums mit zwei Lagen,
- Figur 2 :: einen Querschnitt einer zweiten Ausführungsform des erfindungsgemäßen Filtermediums mit drei Lagen,
- Figur 3 :: einen Querschnitt einer dritten Ausführungsform des erfindungsgemäßen Filtermediums mit drei Lagen,
- Figur 4 :: einen Querschnitt einer vierten Ausführungsform des erfindungsgemäßen Filtermediums mit drei Lagen,
- Figur 5 :: eine perspektivische Ansicht eines sterngefalteten Filterelements, welches das erfindungsgemäße Filtermedium aufweist, und
- Figur 6 :: eine perspektivische Teilansicht einer weiteren Ausführungsform eines erfindungsgemäßen Filterelements in der Form eines ebenen Panelfilters.

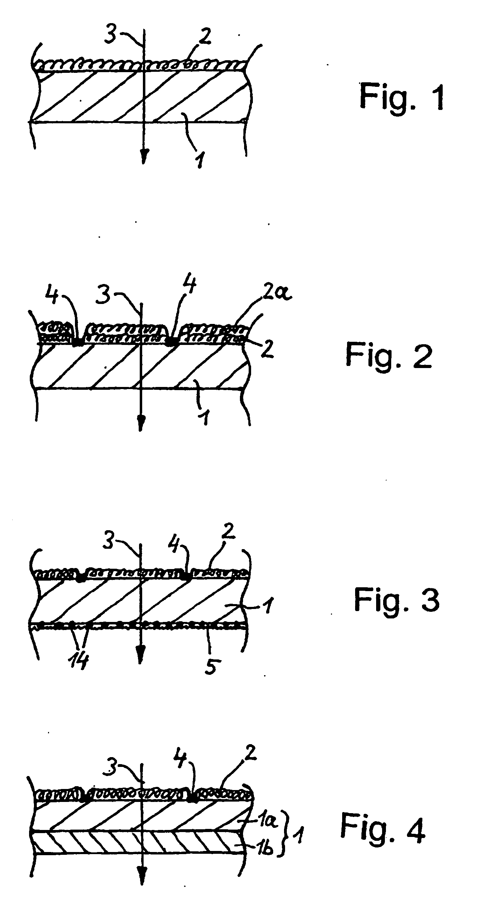

Die in Figur 1 dargestellte erste Ausführungsform des erfindungsgemäßen Filtermediums besteht aus einem üblichen Filterpapier 1, auf das eine Meltblownschicht 2 anströmseitig aufgelegt ist. Die Durchströmungsrichtung des Filtermediums ist mit einem Pfeil 3 gekennzeichnet. Die Meltblownschicht 2 stellt somit eine Vorfilterschicht dar. Weiterhin ist die Porengröße der Meltblownschicht 2 größer als diejenige des Filterpapiers 1, und zwar größer als 250 mm.

Die Meltblownschicht 2 ist lediglich auf das Filterpapier 1 aufgelegt und hält durch Verhaken der Meltblownschicht, die üblicherweise als Vlies ausgebildet ist, auf dem Filterpapier 1. Spezielle Verbindungsmittel zwischen Filterpapier 1 und der Meltblownschicht 2, beispielsweise Klebemittel, oder zusätzliche Verbindungsverfahren sind daher nicht erforderlich.

Aus Figur 2 ist eine zweite Ausführungsform des erfindungsgemäßen Filtermediums ersichtlich, bei dem sich zwei übereinanderliegende Meltblownschichten 2, 2a anströmseitig auf dem Filterpapier 1 befinden. Beide Meltblownschichten 2, 2a dienen wiederum als grobporiges Vorfilter. Weiterhin sind die beiden Meltblownschichten 2, 2a mittels einer rasterförmigen Ultraschallschweißung mit dem Filterpapier 1 verbunden. Die Schweißpunkte sind mit dem Bezugszeichen 4 bezeichnet.

Figur 3 zeigt eine dritte Ausführungsform des erfindungsgemäßen Filtermediums, das ebenfalls dreilagig ausgebildet ist. Eine sehr grobe Meltblownschicht 2, die auf das Filterpapier 1 aufgebracht ist, dient hier wiederum als Vorfilter. Das Filterpapier 1 ist bei dieser Ausführungsform relativ offenporig ausgestaltet, um eine hohe Standzeit zu erreichen. Damit auch der entsprechend hohe Abscheidegrad gewährleistet ist, wird als dritte Schicht eine dem Stand der Technik entsprechende feinfaserige Meltblownschicht 5 verwendet, die auf der gegenüberliegenden Seite des Filterpapiers 1, d.h. abströmseitig, auf das Filterpapier 1 aufgebracht ist. Die Verbindung zwischen anströmseitiger grober Meltblownschicht 2 und Filterpapier 1 wird durch Ultraschallschweißung hergestellt, wie durch die Schweißpunkte 4 veranschaulicht ist. Die feinfaserige Meltblownschicht 5 wird mittels Sprühkleberauftrag laminiert, wie durch Klebertröpfchen 14 veranschaulicht ist. Insgesamt ergibt sich damit ein dreistufiger Gradientenfilter.

Aus Figur 4 ist eine vierte Ausführungsform des erfindungsgemäßen Filtermediums ersichtlich. Auf dem Filterpapier 1 ist wiederum eine grobe Meltblownschicht 2 aufgebracht und mittels Ultraschallschweißung mit diesem verbunden.

Das Filterpapier 1 ist bei dieser Ausführungsform im Sinne eines Gradientenfilters zweilagig ausgebildet und weist zwei Filterpapierlagen 1a, 1b, auf. Die Filterpapierlage 1a, die zur Meltblownschicht 2 benachbart ist und sich auf derjenigen Seite befindet, die zuerst angeströmt wird, ist durch Wahl einer geeigneten Fasermischung gröber gestaltet als die zweite Filterpapierlage 1b, die eine höhere Abscheidung aufweist. Hieraus ergibt sich wieder ein dreistufiger Gradientenfilter.

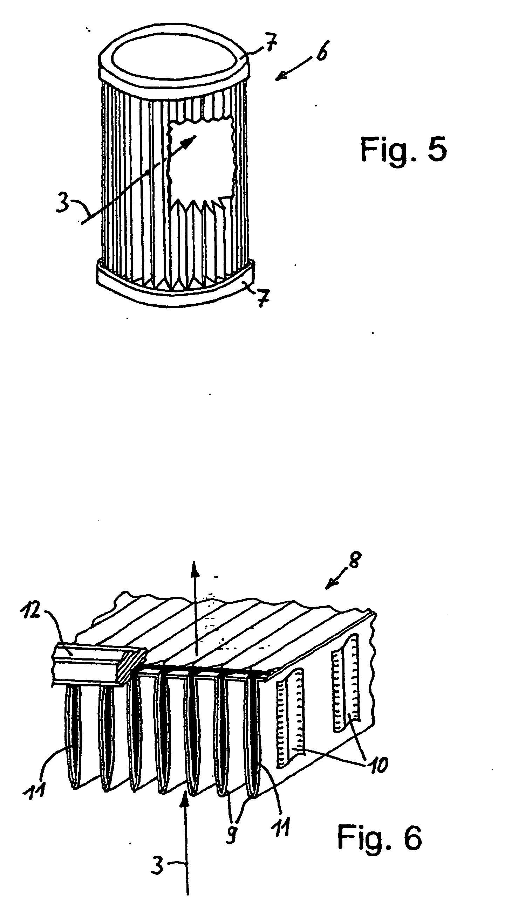

Figur 5 zeigt ein sterngefaltetes Filterelement 6, das aus einem Filtermedium gemäß den Ausführungsbeispielen der Figuren 1 bis 4 aufgebaut ist. Das Filtermedium wird hierbei als Zick-Zack-Faltung eingebracht und die Stirnseiten mittels Endkappen 7 und einer nicht näher gezeigten Vergussmasse aus z.B. PU oder Plastisol abgedichtet. Die erfindungsgemäße, grobporige Meltblownschicht 2, 2a befindet sich auf der Außenseite, wobei das Filterelement 6 von außen nach innen durchströmt wird. Ist die Durchströmungsrichtung umgekehrt, d.h. von innen nach außen, wird das Filtermedium derart angeordnet, dass sich die grobporige Meltblownschicht 2, 2a auf der Innenseite befindet.

Figur 6 zeigt ein ebenes Filterelement 8 in der Form eines Panelfilters, das ebenfalls das in den Figuren 1 bis 4 gezeigte Filtermedium aufweist und insbesondere im Kraftfahrzeugbereich eingesetzt wird. Das glatte Filtermaterial wird vor Bildung von Falten 9 in einem bestimmten Design geprägt. Hierdurch entstehen Noppenprägungsbereiche 10, durch welche die Faltenflanken auf gleichmäßigen Abständen gehalten werden. Zwischen den gegenüberliegenden, sich berührenden Noppenprägungsbereichen 10 bilden sich Filtertaschen aus, die eine einwandfreie Ein- und Ausströmung der Luft in und aus dem Filterelement 8 gewährleisten.

Vor Bildung der Falten 9 wird auf der Reingasseite des Filtermediums eine Hotmeltraupe aufgebracht, um an der späteren Stirnseite des Filterelements eine stirnseitige Abdichtung 11 zu beschaffen. Nach Formung der Falten 9 werden die Falten 9 stirnseitig durch die sich berührenden Hotmeltschichten abgedichtet. Der restliche Hotmelt verschwindet an den Faltenspitzen unter einer nachträglich angebrachten PU-Dichtung 12, die dafür sorgt, dass das Filterelement später im Gehäuse leckagefrei montiert werden kann.

Die erfindungsgemäße grobe Meltblownschicht 2 befindet sich bei dieser Ausführungsform auf der Unterseite des Filterelements, welche die Anströmseite bildet, wie aus dem Pfeil 3 hervorgeht. Die Hotmeltverklebung auf der Filterelementoberseite (Reingasseite) wird hierdurch nicht gestört.

### Beispiele:

Für die Filtration von Zuluft für Verbrennungsmotoren (PKW-Diesel- und Benzinmotoren und LKW-Dieselmotoren) sind je nach Anforderungen verschiedene Filterpapiere mit einer Luftdurchlässigkeit (gemessen bei 200 Pa) von etwa 100 bis knapp über 1000 l/m²s im Einsatz, wobei die Porengrößen (viele Poren nach Dr. Kufferath ("Bubble Test") mit Ethanol) von etwa 35 bis ca. 100 µm reichen. Dieses Spektrum soll mit zwei Papiersorten repräsentiert werden:

| | Luftdurchlässigkeit bei 200 Pa in l/m²s | viele Poren in µm |
|---|---|---|
| Filterpapier Nr. 1 | 860 | 75 |
| Filterpapier Nr. 2 | 260 | 45 |

Als Teststäube sind allgemein üblich die Teststäube SAE grob und SAE fein, andere jedoch nicht ausgeschlossen. Die Anströmgeschwindigkeiten zur Simulation von unterschiedlichen Elementauslegungen wurden mit 6, 5 cm/s und 11 cm/s eingestellt . Das Ende der Bestaubung wird hier durch einen Enddruckverlust von 3000 Pa definiert. Andere Methoden schreiben z.B. einen Druckverlustanstieg während der Bestaubung von 2000 oder 2500 Pa vor. Die Standzeit korreliert mit derjenigen Menge Staub, die unter diesen Labortestbedingungen pro m² Filterfläche auf das Filtermedium aufgebracht werden kann.

Der paarweise Vergleich von Filterpapier einerseits (Referenz) mit Filterpapier plus Meltblown andererseits gibt Aufschluss über den Standzeitgewinn. Abscheidegrade werden hier nicht ausgewiesen, weil sich der Abscheidegrad durch die Meltblownauflage nur geringfügig ändert. Je nach Testmethode sind dies typischerweise z.B. 0 - max. 1 % bei der gravimetrischen Gesamtabscheidung, was auch dadurch bestätigt wird, dass sich die Porengröße (viele Poren) und die Luftdurchlässigkeit durch die Kombination mit einem erfindungsgemäßen Meltblown im Vergleich zu den reinen Papieren nur im Rahmen der Messgenauigkeit ändert bzw. in der natürlichen Schwankungsbreite liegt, die die Filterpapiere an sich schon aufweisen. Deshalb wird auf diese Daten im folgenden nicht mehr genauer eingegangen.

Das Filterpapier Nr. 1 weist mit SAE grob bei 6,5 cm/s eine Staubspeicherkapazität von 641 g/m² auf. Durch die Kombination mit einer Meltblownschicht auf der Anströmseite ergibt sich:

| Polymer | Flächenmasse in g/m² | Luftdurchlässigkeit in l/m²s bei 200 Pa | Staubspeicherkapazität in g/m² | Standzeitgewinn im Vergleich zur Referenz in % |
|---|---|---|---|---|
| PP | 18 | 5200 | 2214 | + 245 |
| PBT | 25 | 10500 | 949 | + 48 |
| PC | 25 | 5000 | 1987 | + 210 |

Im Vergleich dazu ergibt sich mit nicht erfindungsgemäßen Meltblowns (z.B. entsprechend DE 44 43 153):

| Polymer | Flächenmasse in g/m² | Luftdurchlässigkeit in l/m²s bei 200 Pa | Staubspeicherkapazität in g/m² | Standzeitgewinn im Vergleich zur Referenz in % |
|---|---|---|---|---|
| PP | 40 | 400 | 543 | -15 |
| PP | 30 | 700 | 592 | -8 |

Bei einer Erhöhung der Anströmgeschwindigkeit auf 11 cm/s ergibt sich für das Filterpapier Nr. 1 eine Staubspeicherkapazität von 346 g/m², in Kombination mit erfindungsgemäßen Meltblowns:

| Polymer | Flächenmasse in g/m² | Luftdurchlässigkeit in l/m²s bei 200 Pa | Staubspeicherkapazität in g/m² | Standzeitgewinn im Vergleich zur Referenz in % |
|---|---|---|---|---|
| PBT | 25 | 10500 | 641 | +85 |
| PC | 25 | 7200 | 1234 | +256 |

Wiederum kombiniert mit nicht erfindungsgemäßen Meltblowns ergibt sich:

| Polymer | Flächenmasse in g/m² | Luftdurchlässigkeit in l/m²s bei 200 Pa | Staubspeicherkapazität in g/m² | Standzeitgewinn im Vergleich zur Referenz in % |
|---|---|---|---|---|
| PP | 40 | 400 | 285 | -18 |

Das Filterpapier Nr. 2, das durch seine dichtere Struktur einen höheren Druckverlust erzeugt, hat eine Staubspeicherkapazität von 519 g/m² bei 6,5 cm/s, in erfindungsgemäßer Kombination:

| Polymer | Flächenmasse in g/m² | Luftdurchlässigkeit in l/m²s bei 200 Pa | Staubspeicherkapazität in g/m² | Standzeitgewinn im Vergleich zur Referenz in % |
|---|---|---|---|---|
| PP | 18 | 5200 | 1993 | +284 |
| PBT | 20 | 10000 | 849 | +64 |
| PBT | 20 | 11000 | 890 | +72 |
| PBT | 30 | 8400 | 885 | +71 |
| PBT | 30 | 10000 | 966 | +86 |
| PBT | 40 | 7800 | 915 | +77 |
| PBT | 50 | 8600 | 1087 | +110 |
| PBT | 2x20 | 5500 | 1305 | +152 (insgesamt 3-lagig) |
| PC | 25 | 7200 | 1480 | +185 |

3lagige Aufbauten mit PP-Gitterstruktur zwischen Filterpapier und Meltblownschicht:

| Polymer | Flächenmasse in g/m² | Luftdurchlässigkeit in l/m²s bei 200 Pa | Staubspeicherkapazität in g/m² | Standzeitgewinn im Vergleich zur Referenz in % |
|---|---|---|---|---|
| PBT | 20 | 11000 | 1111 | +114 |
| PBT | 40 | 10000 | 1452 | +180 |

Bei der hohen Anströmgeschwindigkeit von 11 cm/s sinkt die Staubspeicherkapazität von Filterpapier Nr. 2 auf 249 g/m², in erfindungsgemäßer Kombination mit Meltblown ergibt sich:

| Polymer | Flächenmasse in g/m² | Luftdurchlässigkeit in l/m²s bei 200 Pa | Staubspeicherkapazität in g/m² | Standzeitgewinn im Vergleich zur Referenz in % |
|---|---|---|---|---|
| PBT | 25 | 10500 | 493 | +98 |
| PC | 25 | 7200 | 783 | +214 |

Werden die Standzeituntersuchungen mit SAE Feinstaub bei 6,5 cm/s durchgeführt, ergibt sich für Filterpapier Nr. 1 eine Staubspeicherkapazität von 256 g/m² und mit Filterpapier Nr. 2 243 g/m². In Kombination mit dem nicht erfindungsgemäßen Meltblown (PP, 40 g/m², 400 l/m²s) reduziert sich die Staubspeicherkapazität auf Werte zwischen 200 und 210 g/m². Mit entsprechend offenen Strukturen ergibt sich jedoch in Kombination mit Filterpapier Nr. 1:

| Polymer | Flächenmasse in g/m² | Luftdurchlässigkeit in l/m²s bei 200 Pa | Staubspeicherkapazität in g/m² | Standzeitgewinn im Vergleich zur Referenz in % |
|---|---|---|---|---|
| PBT | 25 | 10500 | 374 | +46 |
| PC | 25 | 7200 | 555 | +117 |

In Kombination mit Filterpapier Nr. 2:

| Polymer | Flächenmasse in g/m² | Luftdurchlässigkeit in l/m²s bei 200 Pa | Staubspeicherkapazität in g/m² | Standzeitgewinn im Vergleich zur Referenz in % |
|---|---|---|---|---|
| PBT | 20 | 11000 | 363 | +49 |
| PBT | 30 | 10000 | 431 | +78 |
| PBT | 20 | 10000 | 378 | +55 |
| PBT | 30 | 8400 | 450 | +85 |
| PC | 25 | 7200 | 470 | +93 |

Auch bei der hohen Anströmgeschwindigkeit von 11 cm/s und Teststaub SAE fein zeigt sich die Standzeiterhöhung:

| Polymer | Flächenmasse in g/m² | Luftdurchlässigkeit in l/m²s bei 200 Pa | Staubspeicherkapazität in g/m² | Standzeitgewinn im Vergleich zur Referenz in % |
|---|---|---|---|---|
| Filterpapier Nr. 1 | | | 188 | Referenz |
| PP | 40 | 400 | 123 | -35 nicht erfindungsgemäß |
| PBT | 25 | 10000 | 293 | +56 |
| PC | 25 | 7200 | 449 | +139 |
| Filterpapier Nr.2 | | | 116 | Referenz |
| PP | 40 | 400 | 113 | -3 nicht erfindungsgemäß |
| PC | 25 | 7200 | 243 | +110 |

## Patentansprüche

1. Zwei- oder mehrlagiges Filtermedium für die Luftfiltration mit mindestens einer sich auf der Anströmseite des Filtermediums befindlichen Meltblownschicht (2, 2a), deren Porengröße größer ist als diejenige der nachfolgenden Lage(n) und die Fasern aufweist, die einen Durchmesser von über 10 µm haben, **dadurch gekennzeichnet, dass** die Meltblownschicht (2, 2a) eine Porengröße von mehr als 250 µm, eine Flächenmasse von 10 bis 100 g/m² und eine Luftdurchlässigkeit (bei 200 Pa) von über 5000 1/m²s aufweist.

2. Filtermedium nach Anspruch 1, **dadurch gekennzeichnet, dass** das Filtermedium plissierfähig ist.

3. Filtermedium nach einem der vorhergehenden Ansprüche, **dadurch gekennzeichnet, dass** mindestens eine Lage aus einem die Steifigkeit erhöhenden Filterpapier (1) besteht.

4. Filtermedium nach einem der Ansprüche 1 bis 2, **dadurch gekennzeichnet, dass** mindestens eine Lage ein die Steifigkeit erhöhendes Spinnvlies, Krempelvlies oder nassgelegtes Synthesevlies ist.

5. Filtermedium nach Anspruch 3, **dadurch gekennzeichnet, dass** das Filterpapier (1) imprägniert ist.

6. Filtermedium nach einem der vorhergehenden Ansprüche, **dadurch gekennzeichnet, dass** die Meltblownschicht (2, 2a) aus Polyphenylensulfid (PPS), Polycarbonat (PC) oder Polyester, vorzugsweise Polybutylenterephtalat (PBT), oder aus Polyethylen (PE) oder Polypropylen (PP) besteht.

7. Filtermedium nach Anspruch 6, **dadurch gekennzeichnet, dass** die Meltblownschicht (2, 2a) aus Mischungen der genannten Polymeren besteht.

8. Filtermedium nach einem der vorhergehenden Ansprüche, **dadurch gekennzeichnet, dass** die Meltblownschicht (2, 2a) eine Flächenmasse im Bereich zwischen 15 und 35 g/m² aufweist.

9. Filtermedium nach einem der vorhergehenden Ansprüche, **dadurch gekennzeichnet, dass** die Meltblownschicht (2, 2a) auf der angrenzenden Lage ohne zusätzliche Verbindungsmittel aufgelegt ist.

10. Filtermedium nach einem der Ansprüche 1 bis 8, **dadurch gekennzeichnet, dass** die Meltblownschicht (2, 2a) mit der angrenzenden Lage fest verbunden ist.

11. Filtermedium nach Anspruch 10, **dadurch gekennzeichnet, dass** der feste Verbund durch einen raster- oder linienförmigen Kleberauftrag oder durch Sprühkleberauftrag hergestellt ist, oder vorzugsweise durch rasterförmige Ultraschallschweißung.

12. Filterelement zur Luftfiltration mit einem Filtermedium gemäß einem der vorhergehenden Ansprüche.

13. Filterelement nach Anspruch 12, **dadurch gekennzeichnet, dass** das Filtermedium plissiert ist.

14. Filterelement nach Anspruch 13, **dadurch gekennzeichnet, dass** das plissierte Filtermedium in der Form eines ebenen Panelfilters angeordnet ist.

15. Filterelement nach Anspruch 13, **dadurch gekennzeichnet, dass** das plissierte Filtermedium kreisförmig als sterngefalteter Patronenfilter angeordnet ist.

## Claims

1. A dual- or multi-layer filter medium for air filtration, which comprises at least one meltblown layer (2, 2a) located on the inlet side of the filter medium, the pore size of the meltblown layer being larger than that of the following layer(s), and the meltblown layer comprising fibers having a diameter of more than 10 µm, **characterized in that** the meltblown layer (2,2a) possesses a pore size of more than 250 µm, an area mass in a range between 10 and 100 g/m² and an air permeability (at 200Pa) of over 5000 l/m²s.

2. The filter medium as set forth in claim 1, **characterized in that** the filter medium is pleatable.

3. The filter medium as set forth in any one of the preceding claims, **characterized in that** at least one layer includes a filter paper (1) increasing rigidity.

4. The filter medium as set forth in any one of the claims 1 through 2, **characterized in that** at least one layer is a spun non-woven material, a crimped non-woven material or a wet-laid non-woven material increasing rigidity.

5. The filter medium as set forth in claim 3, **characterized in that** the filter paper (1) is impregnated.

6. The filter medium as set forth in any one of the preceding claims, **characterized in that** the meltblown layer (2, 2a) includes polyphenylene sulfide (PPS), polycarbonate (PC) or polyester, preferably polybutylene terephthalate (PBT) or polyethylene (PE) or polypropylene (PP).

7. The filter medium as set forth in claim 6, **characterized in that** the meltblown layer (2, 2a) includes mixtures of the said polymers.

8. The filter medium as set forth in any one of the preceding claims, **characterized in that** the meltblown layer (2, 2a) possesses an area mass in a range between 15 and 35 g/m².

9. The filter medium as set forth in any one of the preceding claims, **characterized in that** the meltblown layer (2, 2a) is placed in position on a contiguous layer without any additional connecting means.

10. The filter medium as set forth in any one of the claim 1 through 8, **characterized in that** the meltblown layer (2 and 2a) is firmly bonded to the contiguous layer.

11. The filter medium as set forth in claim 10, **characterized in that** the firm join is produced using a grid-like or linear array of adhesive or by spraying on adhesive, or preferably is produced by grid-like ultrasonic welding.

12. A filter element for air filtration comprising a filter medium as set forth in any of the preceding claims.

13. The filter element as set forth in claim 12, **characterized in that** the filter medium is pleated.

14. The filter element as set forth in claim 13, **characterized in that** the pleated filter medium is arranged in the form of flat panel filter.

15. The filter element as set forth in claim 13, **characterized in that** the pleated filter medium is arranged circularly as a star folded cartridge filter.

## Revendications

1. Média filtrant à deux ou à plusieurs couches pour la filtration de l'air, comportant au moins une couche de matériau dit "meltblown" (2, 2a) située du côté afflux du média filtrant, dont la taille des pores est supérieure à celle de la ou des couche(s) suivante(s) et qui comprend des fibres d'un diamètre de plus de 10 µm, **caractérisé en ce que** la couche meltblown (2, 2a) présente une taille de pores de plus de 250 µm, une masse surfacique de 10 à 100 g/m², et une perméabilité à l'air (à 200 Pa) de plus de 5000 l/m²s.

2. Média filtrant selon la revendication 1, **caractérisé en ce que** le média filtrant est capable d'être plissé.

3. Média filtrant selon l'une des revendications précédentes, **caractérisé en ce qu'**au moins une couche est constituée par un papier filtrant (1) augmentant la rigidité.

4. Média filtrant selon l'une des revendications 1 à 2, **caractérisé en ce qu'**au moins une couche est une nappe filée-liée, une nappe de carde ou une nappe synthétique posée à l'état humide.

5. Média filtrant selon la revendication 4, **caractérisé en ce que** le papier filtrant (1) est imprégné.

6. Média filtrant selon l'une des revendications précédentes, **caractérisé en ce que** la couche meltblown (2, 2a) est constituée de polysulfure de phénylène (PPS), de polycarbonate (PC) ou de polyester, de préférence de polybutylène-téréphtalate (PBT) ou de polyéthylène (PE) ou de polypropylène (PP).

7. Média filtrant selon la revendication 6, **caractérisé en ce que** la couche meltblown (2, 2a) est constituée de mélanges desdits polymères.

8. Média filtrant selon l'une des revendications précédentes, **caractérisé en ce que** la couche meltblown (2, 2a) présente une masse surfacique dans la plage de 15 à 35 g/m².

9. Média filtrant selon l'une des revendications précédentes, **caractérisé en ce que** la couche meltblown (2, 2a) est posée sur la couche adjacente sans moyen de liaison supplémentaire.

10. Média filtrant selon l'une des revendications 1 à 8, **caractérisé en ce que** la couche meltblown (2, 2a) est fermement reliée à la couche adjacente.

11. Média filtrant selon la revendication 10, **caractérisé en ce que** le composite ferme est réalisé par déposition de colle en forme de trame ou de lignes ou par déposition de colle par pulvérisation, ou de préférence par soudage ultrasons en forme de trame.

12. Élément filtrant pour la filtration d'air comportant un média filtrant selon l'une des revendications précédentes.

13. Élément filtrant selon la revendication 12, **caractérisé en ce que** le média filtrant est plissé.

14. Élément filtrant selon la revendication 13, **caractérisé en ce que** le média filtrant plissé est agencé sous la forme d'un filtre en panneau plan.

15. Élément filtrant selon la revendication 13, **caractérisé en ce que** le média filtrant plissé est agencé en forme circulaire à titre de filtre en cartouche plié en étoile.
